# EUROPEAN PATENT APPLICATION

(11) **EP 4 216 097 A1**
(43) Date of publication of application: **26.07.2023**
(21) Application number: 23152567.6
(22) Date of filing: 20.01.2023
(51) Int. Cl.: G06F 30/23, G06F 8/30, G06F 111/10

(54) **METHOD, SYSTEM, EQUIPMENT AND MEDIUM FOR MODIFYING THE LAYERING LAYER INFORMATION OF FINITE ELEMENT MODEL UNIT**

(30) Priority: 20.01.2022 CN 202210066245
(71) Applicant: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(57) **Abstract**

The present invention discloses a method, system, equipment and medium for modifying the layering layer information of finite element model (hereinafter called FEM) unit. The method comprises: obtaining the unit ID to be modified, determining the file to be modified according to the unit ID to be modified; receiving the new layering layer attribute ID regarding to the unit ID to be modified inputted by user, and replacing the original layering layer attribute ID corresponding to the unit ID to be modified in the file to be modified with the new layering layer attribute ID to complete the modifying the layering layer information of FEM unit. The invention can directly modify the layering layer information of the units in the model file, without importing the model file into the pre-processing software to modify it and then exporting it again, reducing the workload of technical staff and saving development time, and the method is easy to operate and less prone to errors, and can achieve batch modification of the layering layer information of FEM unit in a short time.

## Description

### Technical Field

The present invention relates to the technical field of data processing, especially relates to a method, system, equipment and medium for modifying the layering layer information of finite element model (FEM) unit.

### Background

FEM is the model established by using the finite element analysis method, and a combination of units that are connected only at the nodes, transmitted only by the nodes and constrained only at the nodes. NASTRAN is a large application finite element program developed to meet the urgent needs of the aerospace industry for structural analysis. The current method of modifying NASTRAN model files requires reimporting the model files into the pre-processing software for modification and reexporting the calculation files after the modifications are completed. NASTRAN model files have a large amount of data, and repeated import and export workloads are high and susceptible to errors.

### Summary of the Invention

This invention provides a method, system, equipment and medium for modifying the layering layer information of FEM unit to complete the modification of the layering layer information of FEM unit quickly and accurately.

First aspect of the present invention provides a method for modifying the layering layer information of FEM unit, it comprises:
Obtain the unit ID to be modified, determine the file to be modified according to the unit ID to be modified;
Receive the new layering layer attribute ID regarding to the unit ID to be modified inputted by user, and replace the original layering layer attribute ID corresponding to the unit ID to be modified in the file to be modified with the new layering layer attribute ID to complete the modifying the layering layer information of FEM unit.

The new layering layer attribute ID and the original layering layer attribute ID can respectively be any layering layer attribute IDs of the layering layer's card.

After obtaining the unit ID to be modified and determining the file to be modified according to the unit ID to be modified, it can further comprise:
The original layering layer attribute ID corresponding to the unit ID to be modified is read from the file to be modified and displayed.

Before replacing the original layering layer attribute ID corresponding to the unit ID to be modified in the file to be modified with the new layering layer attribute ID, it can further comprise:
Display the unit ID to be modified and the relevant new layering layer attribute ID, and prompt the user for modification confirmation and receive the modification confirmation instructions from the user.

Second aspect of the present invention provides a system for modifying the layering layer information of FEM unit, it comprises:
A modification unit determination model, which is for obtaining the unit ID to be modified, determining a file to be modified according to the unit ID to be modified;
A layering layer information modification model, which is for receiving the new layering layer attribute ID regarding to the unit ID to be modified inputted by user, and replacing the original layering layer attribute ID corresponding to the unit ID to be modified in the file to be modified with the new layering layer attribute ID to complete the modifying the layering layer information of FEM unit.

The new layering layer attribute ID and the original layering layer attribute ID can respectively be any layering layer attribute IDs of the layering layer's card.

The system can further include a layering layer information display modification model for:
After obtaining the unit ID to be modified and determining the file to be modified according to the unit ID to be modified, the original layering layer attribute ID corresponding to the unit ID to be modified can be read from the file to be modified and can be displayed.

The system can further include a modification display confirmation model for:
Before replacing the original layering layer attribute ID corresponding to the unit ID to be modified in the file to be modified with the new layering layer attribute ID, preferably displaying the unit ID to be modified and the relevant new layering layer attribute ID and preferably prompting the user for modification confirmation and preferably receiving the modification confirmation instructions from the user.

Third aspect of the present invention provides a computer device. It comprises a memory, a processor and a computer program stored in the memory and run on the processor, the processor implements the method for modifying the layering layer information of FEM unit as described in any embodiments of the invention when executing the program.

Forth aspect of the present invention provides a storage medium comprising computer executable instructions, the computer executable instructions are used to perform the method for modifying the layering layer information of FEM unit as described in any embodiments of the invention when executed by a computer processor.

The present invention obtains the unit ID to be modified, determines the file to be modified according to the unit ID to be modified, receives the new layering layer attribute ID regarding to the unit ID to be modified inputted by the user and replaces the original layering layer attribute ID corresponding to the unit ID to be modified in the file to be modified with the new layering layer attribute ID to complete the modifying the layering layer information of FEM unit. The invention can directly modify the layering layer information of the units in the model file, without importing the model file into the pre-processing software to modify it and then exporting it again, reducing the workload of technical staff and saving development time, and the method is easy to operate and less prone to errors, and can achieve batch modification of the layering layer information of FEM unit in a short time.

### Brief Description of the Figures

Fig. 1 shows the flow chart of a method for modifying the layering layer information of FEM unit provided in embodiment 1 of the present invention;
Fig. 2 shows the block diagram of the structure of system for modifying the layering layer information of FEM unit provided in embodiment 2 of the present invention;
Fig. 3 shows the block diagram of the structure of computer device provided in embodiment 3 of the present invention.

### Detailed Description

The invention is described in further detail below in connection with the drawings and embodiments. It could be understood that the specific embodiments described herein are intended to explain the invention only and are not intended to limit it. It is also to be pointed that, for ease of description, only the parts of the structure relating to the invention are shown in the drawings and not the entire structure. Furthermore, the embodiments and the features in the embodiments in the invention may be combined with each other where there is no conflict.

### Embodiment 1

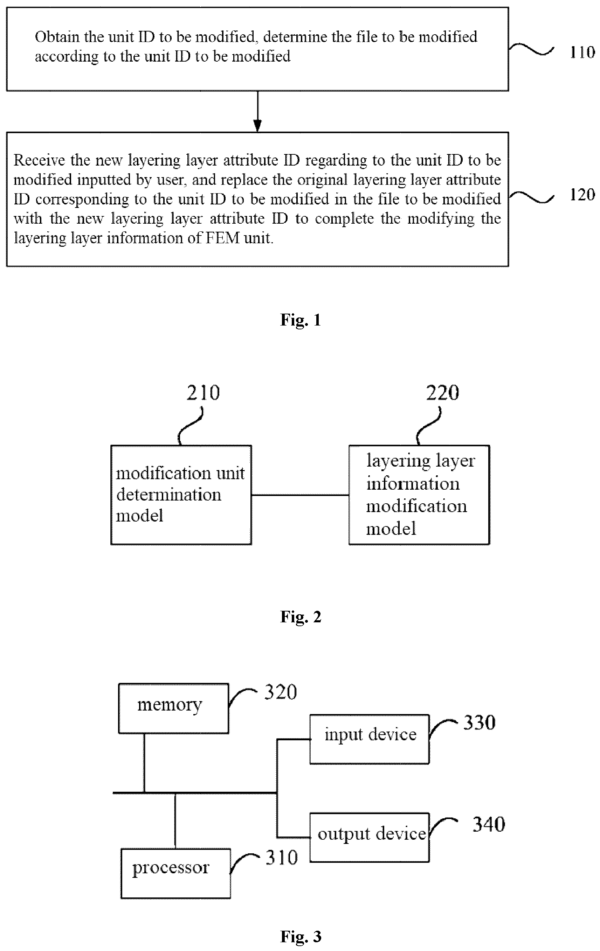

Figure 1 shows the flow chart of a method for modifying the layering layer information of FEM unit provided in embodiment 1 of the present invention. This embodiment can be applied to the case of modifying the layering layer information in a FEM model file.

The method can be performed by the system for modifying the layering layer information of FEM unit, which can be implemented by software and/or hardware.

As shown in Figure 1, the method specifically comprises the following steps:
Step 110, obtain the unit ID to be modified, determine the file to be modified according to the unit ID to be modified.

Wherein the unit ID to be modified can be understood as the ID number of the FEM unit for which the layering layer information needs to be modified. The unit ID to be modified can be entered by the user and multiple unit IDs can be entered at the same time. The file to be modified can be understood that it contains the model file of the layering layer information corresponding to the unit ID to be modified.

In practice, a system for modifying the layering layer information of FEM unit can be built, which include an interactive interface that can interact with the user. When the user wants to modify some unit's layering layer information, he can click on the controls in the interactive interface to fill in the unit ID to be modified. When the unit's layering layer information modification system receives the unit ID to be modified from the user, it can determine the file to be modified that needs to modify the layering layer information according to the unit ID to be modified. At this point the user can reconfirm the file to be modified, for example by popping up a dialog box in the interactive interface, which displays the model files that can be modified, and the user selects the file to be modified and identifies it as the file to be modified.

After step 110, the method for modifying the layering layer information of FEM unit may further comprise the flowing steps:
The original layering layer attribute ID corresponding to the unit ID to be modified is read from the file to be modified and displayed.

In the embodiment, the new layering layer attribute ID and the original layering layer attribute ID are respectively any layering layer attribute IDs of the layering layer's card. The layering layer attribute ID can be the identification number of a combination of unit attributes. The unit's layering layer information modification system can display the unit ID to be modified and the original layering layer attribute ID read on the interactive interface for easy viewing for the user.

Step 120, receiving the new layering layer attribute ID regarding to the unit ID to be modified inputted by user, and replacing the original layering layer attribute ID corresponding to the unit ID to be modified in the file to be modified with the new layering layer attribute ID to complete the modifying the layering layer information of FEM unit.

In practice, users can enter the new layering layer attribute ID they want to modify in the interactive interface of the unit layering layer information modification system after determining that the unit ID to be modified and the corresponding original layering layer attribute ID are correct. When the layering layer information modification system receives the new layering layer attribute ID entered by the user, it can traverse the content information of the file to be modified, and replace the original layering layer attribute ID corresponding to the unit ID to be modified with the new layering layer attribute ID. Since the new layering layer attribute ID points to a specific set of unit attribute combination, replacing the original layering layer attribute ID corresponding to the unit ID to be modified in the file to be modified with the new layering layer attribute ID means that the layering layer information corresponding to the unit ID to be modified has been modified.

Before replacing the original layering layer attribute ID corresponding to the unit ID to be modified in the file to be modified with the new layering layer attribute ID, the method for modifying the layering layer information of FEM unit provided in this embodiment can also include the following steps:
Displaying the unit ID to be modified and the corresponding new layering layer attribute ID, and prompting the user for modification confirmation and receiving the modification confirmation instructions from the user.

In this embodiment, the unit ID to be modified and the corresponding new layering layer attribute ID can be displayed on the interactive interface for the user to reconfirm whether the information has been entered correctly. When the user issues a modification confirmation instruction, the unit layering layer information modification system receives the instruction and replaces the original layering layer attribute ID corresponding to the unit ID to be modified in the file to be modified with the new layering layer attribute ID.

For example, the interactive interface of the FEM unit layering layer information modification system has buttons for "show unit ID to be modified", "read original layering layer attribute ID", "show new layering layer attribute ID" and "layering layer information modification" and " layering layer information modification" etc., input boxes for "fill in unit ID to be modified" and "fill in new layering layer attribute ID" etc., and display lists for "unit ID to be modified", "original layering layer attribute ID" and "new layering layer attribute ID" etc. The user enters "200001: 299999" in the "unit ID to be modified" input box and clicks on the "show unit ID to be modified" button, then 200001 and 299999 are displayed in the display list of "unit ID to be modified" respectively. When the user clicks on "read original layering layer attribute ID", a dialog box pops up in the interactive interface, in which the user can select the file to be modified. After the file which the user's selected matches the file to be modified confirmed by the system, 105 will be displayed in the display list of the "original layering layer attribute ID" corresponding to the units to be modified from the ID numbers 200001 to 299999, e.g. 105 is the original layering layer attribute ID corresponding to the units to be modified with ID numbers 200001 to 299999. The user enters "201" in the "fill in new layering layer attribute ID" input box, clicks on the "layering layer information modification" button, 201 is displayed in the "new layering lay attribute ID" display list corresponding to the units to be modified with ID numbers from 200001 to 299999. Once the user has confirmed that the modification information is correct, click on the "layering layer information modification" button and the original pavement attribute ID 105 corresponding to the unit ID to be modified in the file to be modified is replaced with the new layering layer attribute ID 201.

The technical solution of this embodiment is to obtain the unit ID to be modified, determine the file to be modified according to the unit ID to be modified, receive the new layering layer attribute ID regarding to the unit ID to be modified inputted by the user, and replace the original layering layer attribute ID corresponding to the unit ID to be modified in the file to be modified with the new layering layer attribute ID to complete the modifying the layering layer information of FEM unit. The embodiment of the present invention can directly modify the layering layer information of the units in the model file, without importing the model file into the pre-processing software to modify it and then exporting it again, reducing the workload of technical staff and saving development time, and the method is easy to operate and less prone to errors, and can achieve batch modification of the layering layer information of FEM unit in a short time.

### Embodiment 2

The FEM unit layering layer information modification system provided by embodiments of the present invention can execute the method for modifying the layering layer information of FEM unit provided by any of the embodiments of the present invention, having the corresponding functional modules and beneficial effects of the execution method. Fig. 2 is the block diagram of the structure of system for modifying the layering layer information of FEM unit provided in embodiment 2 of the present invention, as shown in Fig. 2, the system includes: a modification unit determination model 210 and a layering layer information modification model 220.

The modification unit determination model 210 is for obtaining the unit ID to be modified and determining the file to be modified according to the unit ID to be modified; The layering layer information modification model 220, which is for receiving the new layering layer attribute ID regarding to the unit ID to be modified inputted by user, and replacing the original layering layer attribute ID corresponding to the unit ID to be modified in the file to be modified with the new layering layer attribute ID to complete the modifying the layering layer information of FEM unit.

The technical solution of this embodiment is to obtain the unit ID to be modified, determine the file to be modified according to the unit ID to be modified, receive the new layering layer attribute ID regarding to the unit ID to be modified inputted by user, and replace the original layering layer attribute ID corresponding to the unit ID to be modified in the file to be modified with the new layering layer attribute ID to complete the modifying the layering layer information of FEM unit. The embodiment of the present invention can directly modify the layering layer information of the units in the model file, without importing the model file into the pre-processing software to modify it and then exporting it again, reducing the workload of technical staff and saving development time, and the method is easy to operate and less prone to errors, and can achieve batch modification of the layering layer information of FEM unit in a short time.

The new layering layer attribute ID and the original layering layer attribute ID are respectively any layering layer attribute IDs of the layering layer's card.

The system further includes a layering layer information display modification model for:
After obtaining the unit ID to be modified and determining the file to be modified according to the unit ID to be modified, the original layering layer attribute ID corresponding to the unit ID to be modified is read from the file to be modified and displayed.

The system further includes a modification display confirmation model for:
Before replacing the original layering layer attribute ID corresponding to the unit ID to be modified in the file to be modified with the new layering layer attribute ID, displaying the unit ID to be modified and the relevant new layering layer attribute ID and prompting the user for modification confirmation and receiving the modification confirmation instructions from the user.

### Embodiment 3

Fig. 3 is the block diagram of the structure of computer device provided in embodiment 3 of the present invention, as shown in Fig. 3, the computer device comprises a processor 310, a memory 320, an input device 330 and an output device 340; the number of the processors 310 in the computer device can be one or more, one processor 310 used as an example in Figure 3. The processors 310, the memory 320, the input device 330 and the output device 340 in the computer device may be connected via a bus or other means, the connection via a bus used as an example in Fig. 3.

The memory 320, as a computer readable storage medium, can be used to store software programs, computer executable programs, and modules, such as program instructions/modules corresponding to the method for modifying the layering layer information of FEM unit in this embodiment of the invention (e.g., the modification unit determination model 210 and the layering layer information modification model 220 in the FEM unit layering layer information modification system). The processor 310 performs various functional applications and data processing of the computer device by running the software programs, instructions and modules stored in the memory 320, i.e. implementing the method for modifying the layering layer information of FEM unit described above.

The memory 320 may primarily comprise a stored program area and a stored data area, wherein the stored program area may store the operating system, the applications required for at least one function; the stored data area may store the data created based on the usage of the terminal, etc. In addition, the memory 320 can include high-speed random access memory, and can also include non-volatile memory, such as at least one disk memory device, flash memory device, or other non-volatile solid state memory device. In some examples, the memory 320 can further include memory that is remotely located relative to processor 310, and these remote memories can be connected to the computer device by a network. The examples of the above networks include but are not limited to, Internet, corporate intranets, local area networks, mobile communication networks, and combinations thereof.

The input device 330 can receive the numeric or character information inputted, and the generated key signal inputs relating to user settings of the computer device and control functions. Output device 340 can comprise a display device such as a display screen.

### Embodiment 4

The storage medium comprising computer executable instructions provided in embodiment 4, the computer executable instructions are used to perform the method for modifying the layering layer information of FEM unit when executed by a computer processor, the method comprises:
Obtain the unit ID to be modified, determine the file to be modified according to the unit ID to be modified;
Receive the new layering layer attribute ID regarding to the unit ID to be modified inputted by the user, and replace the original layering layer attribute ID corresponding to the unit ID to be modified in the file to be modified with the new layering layer attribute ID to complete the modifying the layering layer information of FEM unit.

Of course, a storage medium comprising computer executable instruction provided by the embodiment of the present invention are not limited to the method operations as described above, but can also perform the relevant operations in the method for modifying the layering layer information of FEM unit provided by any embodiment of the present invention.

From the above description of the implementation, it will be clear to those skilled in the field that the invention can be implemented with the aid of software and the necessary general hardware, or of course with hardware, but in many cases the former is the preferred embodiment. Based on this understanding, the technical solution of the invention which essentially or rather contributes to the prior art can be embodied in the form of a software product, which can be stored in a computer-readable storage medium, for example, a computer's floppy disk, read only memory (ROM), random access memory (RAM), flash memory (FLASH), hard disk or optical disk, etc., include several instructions to enable a computer device (can be a personal computer, server, or network device, etc.) to execute the methods described in various embodiments of the invention.

It is worth noting that in the above embodiment of the system for modifying the layering layer information of FEM unit, the units and model included are only divided according to the functional logic, but not limited to the above division, as long as the corresponding functions can be realized. In addition, the specific names of each functional unit are only used to distinguish each other, and are not used to limit the protection scope of the invention.

It is noted that the above is only a preferred embodiment of the invention and the applied technical principles. Those skilled in the art will understand that the invention is not limited to the specific embodiments described here, and that for those skilled in the art, various obvious changes, readjustments and substitutions can be made without departing from the protection scope of the invention. Therefore, although the invention has been described in more detail through the above embodiments, the invention is not limited to the above embodiments. Without departing from the concept of the invention, it can also include more equivalent embodiments, and the scope of the invention is determined by the scope of the appended claims.

## Claims

1. A method for modifying a layering layer information of FEM unit, which is **characterized in that**, comprising:
obtaining a unit ID to be modified, determining a file to be modified according to the unit ID to be modified;
receiving a new layering layer attribute ID regarding to the unit ID to be modified inputted by a user, and replacing an original layering layer attribute ID corresponding to the unit ID to be modified in the file to be modified with the new layering layer attribute ID to complete the modifying the layering layer information of FEM unit.

2. The method for modifying the layering layer information of FEM unit according to claim 1, which is **characterized in that**:
the new layering layer attribute ID and the original layering layer attribute ID are respectively any layering layer attribute IDs of the layering layer's card.

3. The method for modifying the layering layer information of FEM unit according to claim 1, which is **characterized in that**, after obtaining the unit ID to be modified and determining the file to be modified according to the unit ID to be modified, further comprising:
the original layering layer attribute ID corresponding to the unit ID to be modified is read from the file to be modified and displayed.

4. The method for modifying the layering layer information of FEM unit according to claim 1, which is **characterized in that**, before replacing the original layering layer attribute ID corresponding to the unit ID to be modified in the file to be modified with the new layering layer attribute ID, further comprising:
displaying the unit ID to be modified and the relevant new layering layer attribute ID, and prompting the user for modification confirmation and receiving the modification confirmation instructions from the user.

5. A system for modifying a layering layer information of FEM unit, which is **characterized in that**, comprising:
a modification unit determination model (210), which is configured for obtaining a unit ID to be modified, determining a file to be modified according to the unit ID to be modified;
a layering layer information modification model (220), which is configured for receiving a new layering layer attribute ID regarding to the unit ID to be modified inputted by a user, and for replacing an original layering layer attribute ID corresponding to the unit ID to be modified in the file to be modified with the new layering layer attribute ID to complete the modifying the layering layer information of FEM unit.

6. The system for modifying the layering layer information of FEM unit according to claim 5, which is **characterized in that**, the new layering layer attribute ID and the original layering layer attribute ID are respectively any layering layer attribute IDs of the layering layer's card.

7. The system for modifying the layering layer information of FEM unit according to claim 5, which is **characterized in that**, the system further includes a layering layer information display modification model configured for: after obtaining the unit ID to be modified and determining the file to be modified according to the unit ID to be modified, the original layering layer attribute ID corresponding to the unit ID to be modified is read from the file to be modified and displayed.

8. The system for modifying the layering layer information of FEM unit according to claim 5, which is **characterized in that**, the system further includes a modification display confirmation model configured for: before replacing the original layering layer attribute ID corresponding to the unit ID to be modified in the file to be modified with the new layering layer attribute ID, displaying the unit ID to be modified and the relevant new layering layer attribute ID and prompting the user for modification confirmation and receiving the modification confirmation instructions from the user.

9. A computer device comprising a memory (320), a processor (310) and a computer program stored in the memory (320) and run on the processor (310), which is **characterized in that** the processor (310) implements the method for modifying the layering layer information of FEM unit as described in any one of claims 1-4 when executing the program.

10. A storage medium comprising computer executable instructions, which is **characterized in that** the computer executable instructions are used to perform the method for modifying the layering layer information of FEM unit as described in any one of claims 1-4 when executed by a computer processor.
